# EUROPEAN PATENT SPECIFICATION

(11) **EP 4 431 052 B1**
(45) Date of publication and mention of the grant of the patent: **13.08.2025**
(21) Application number: 23161921.4
(22) Date of filing: 14.03.2023
(51) Int. Cl.: A61C 1/08, A61C 8/00

(54) **SUBPERIOSTEAL IMPLANT KIT AND DESIGNING METHOD**
SUBPERIOSTEALIMPLANTATKIT UND DESIGNVERFAHREN
KIT D'IMPLANT SUBPÉRIOSTÉAL ET MÉTHODE DE DESIGN

(43) Date of publication of application: 18.09.2024
(73) Proprietor: Biotec S.r.l., 36031 Povolaro di Dueville (VI) (IT)
(72) Inventor: PONTARIN, Roberta, 36031 Dueville (VI) (IT); SCALCHI, Veronica, 36100 Vicenza (VI) (IT); TREVISAN, Mariagrazia, 30015 Chioggia (VE) (IT)
(74) Representative: Gallo, Luca

(56) References cited:
- WO-A1-2016/201580
- US-A1- 2017 312 057
- US-A1- 2020 261 189
- US-A1- 2021 244 514
- US-A1- 2022 015 871

## Description

### Field of application

The present invention relates to a subperiosteal surgical kit and a method for designing the aforesaid subperiosteal surgical kit, according to the preamble of the respective independent claims.

The surgical kit object of the invention and the relative design method may be advantageously used in juxtaosseous surgery, in order to mount a subperiosteal (or juxtaosseous) implant on the mandibular or maxillary bone of a patient, and it may be advantageously used both during bone preparation, and during implant installation operations.

Therefore, the kit in question fits into the industrial sector of the production of surgical devices, in particular for juxtaosseous surgery.

### Prior art

Subperiosteal implants, also known as juxtaosseous implants, are dental implants used to restore teeth in patients with severe bone atrophy.

In fact, these implants allow the stumps necessary to support a dental prosthesis to be placed at the alveolar crest without the need to drill the crest itself, but fixing the implant on portions of the bone spaced from the crest and enveloping the latter.

Such implants comprise a grid, usually made of titanium, which rests on the patient's maxillary or mandibular bone, enveloping the alveolar crest, and is fixed to the bone by means of osteosynthesis screws. For this purpose, these grids are provided with several through fixing holes, usually placed close to a perimeter edge of the grid, which are engageable by the aforementioned osteosynthesis screws to fix the grid to the bone.

Furthermore, such grids of the known type comprise several stumps, which may be made in a single body or be assembled subsequently, and which are intended to support a dental prosthesis for restoring a patient's teeth.

As is known, the installation of the aforesaid implants requires drilling the bone using a surgical drill for fixing the implants themselves. This drilling operation requires a high degree of dexterity and precision by the surgeon, as it requires perfectly aligning all the fixing holes necessary to fix the juxtaosseous implant.

For this purpose, patent EP 3784166 discloses a kit for assembling a subperiosteal (juxtaosseous) implant which comprises a subperiosteal implant, intended to be placed in abutment on the patient's bone and provided with several fixing holes, to fix the bone implant using known osteosynthesis screws.

Such kit also comprises a plurality of guide bushings, which are fixed by screwing directly to the subperiosteal implant, each at a separate fixing hole, and are intended to be engaged by a surgical drill to guide the drill towards the patient's bone in order to drill the latter by making the holes at the fixing holes of the implant in order to be able to proceed subsequently with the fixing of the implant.

The kit for assembling a subperiosteal implant of the type described above has proved to be not free from drawbacks in practice.

A first drawback is given by the fact that this kit has proved to be extremely complicated to make from the production point of view. In fact, this kit envisages fixing the bushings by screwing directly onto the subperiosteal implant, and therefore needs a plurality of threaded fixing holes to be made on the implant, to allow the screwing of the guide bushings. From a practical point of view, the creation of threaded fixing holes implies a complicated milling process to be carried out on a subperiosteal implant.

A further drawback is given by the fact that this kit is more uncomfortable and invasive for the final patient. In fact, the arrangement of the threaded fixing holes determines the need to considerably increase the thickness of the subperiosteal implant, at least at the fixing holes themselves, in order to allow a secure and resistant fixing of the bushings on the implant. This determines a greater encumbrance of the subperiosteal implant, which is therefore more invasive once installed on the patient's bone.

If, on the other hand, the subperiosteal implant does not have an increased thickness at the aforementioned fixing holes, there will instead be a concrete risk of poor mechanical strength of the fixing between the bushings and the implant, resulting in a danger during the bone milling step in the event that the bushes become detached.

A further drawback is due to the fact that the kit of the known type described above requires high precision and tolerance in the production step, in order to obtain a precise engagement threading in the fixing holes of the implant.

A further drawback is due to the fact that this kit of the known type described above determines a high number of operations necessary for the assembly of the final system, and is onerous in terms of time to carry out the assembly of the system. In fact, this kit provides that the bushings are first fixed to the implant, to then proceed with the assembly of the implant with the bushings mounted, with which the surgeon carries out the milling operations. However, it is also necessary for the implant to be separated from the bone to allow easy disassembly of the bushings, and subsequently placed back on the bone to allow the actual fixing of the implant by means of the normal osteosynthesis screws.

A further drawback is due to the fact that this kit does not allow further preparation operations of the bone site to be carried out prior to the installation of the subperiosteal implant.

### Disclosure of the invention

In this situation, the problem underlying the present invention is that of eliminating the drawbacks of the prior art cited above, providing a subperiosteal surgical kit which allows a subperiosteal implant to be mounted in a precise and reproducible manner.

A further object of the present invention is to provide a subperiosteal surgical kit which is comfortable and minimally invasive for the patient.

A further object of the present invention is to provide a subperiosteal surgical kit that is stably fixed to the bone throughout the surgical operation.

A further object of the present invention is to provide a subperiosteal surgical kit which allows the time required for the patient's clinical procedure to be reduced.

A further object of the present invention is to provide a subperiosteal surgical kit which allows distinct preparation operations of the implant site to be carried out.

A further object of the present invention is to provide a subperiosteal surgical kit which allows depending less on the ability of the clinician who has to perform operations for preparing the implant site.

A further object of the present invention is to provide a subperiosteal surgical kit which allows operating safely even in areas where there are sensitive structures such as for example alveolar nerves, palatal arteries, maxillary sinuses, etc.

A further object of the present invention is to provide a subperiosteal surgical kit and a design method which are quick, cost-effective and simple to implement.

A further object of the present invention is to provide a subperiosteal surgical kit and a design method which are easily conformable to the maxillary or mandibular bone of the different patients to be operated on.

The invention is set out in the appended set of claims.

### Brief description of the drawings

The technical features of the invention, according to the aforesaid aims, can clearly be seen in the content of the claims below, and its advantages will become more readily apparent in the detailed description that follows, made with reference to the accompanying drawings, which illustrate a preferred embodiment, which is purely exemplary and not limiting, in which:
- Figure 1 shows a perspective view of a subperiosteal implant of the subperiosteal surgical kit object of the invention, according to a first embodiment example arranged to be mounted on a jaw bone;

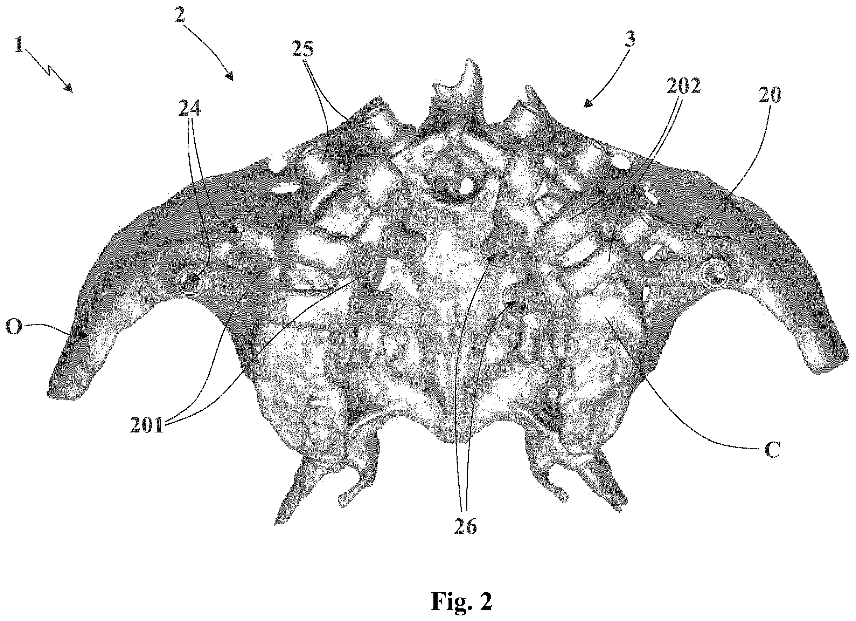

- Figure 2 shows a perspective view of a positioning template of the subperiosteal surgical kit object of the invention, according to the aforementioned first embodiment example;

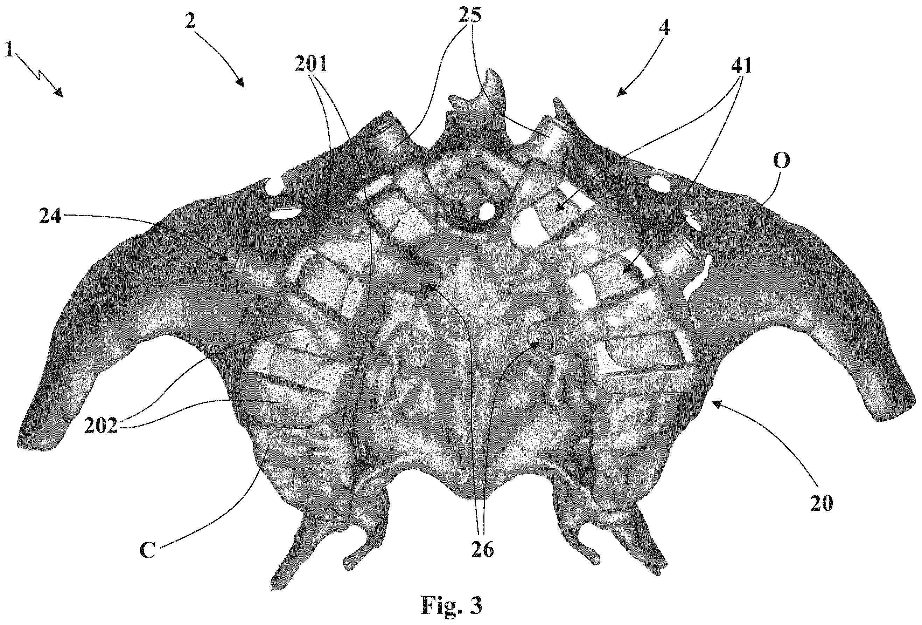

- Figure 3 shows a perspective view of an osteoctomy template of the subperiosteal surgical kit object of the invention, according to the aforementioned first embodiment example;

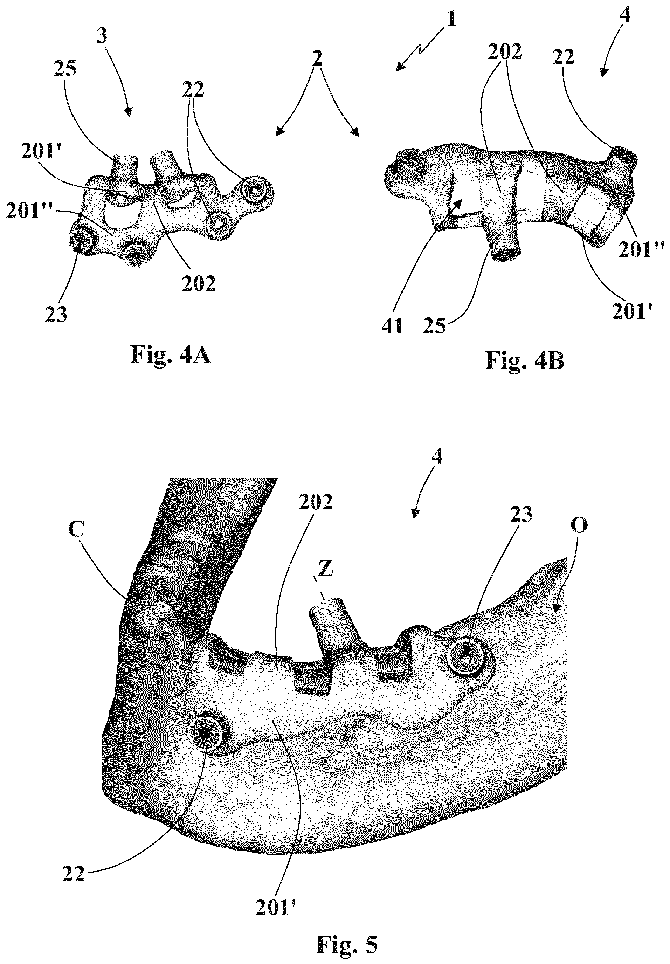

- Figure 4A shows a perspective view of the positioning template of the subperiosteal surgical kit object of the invention, according to a second embodiment example arranged to be mounted on a mandibular bone;
- Figure 4B shows a perspective view of the osteoctomy template of the subperiosteal surgical kit object of the invention, according to the aforementioned second embodiment example;
- Figure 5 shows a view of the osteoctomy template of figure 4B mounted on a mandibular bone;

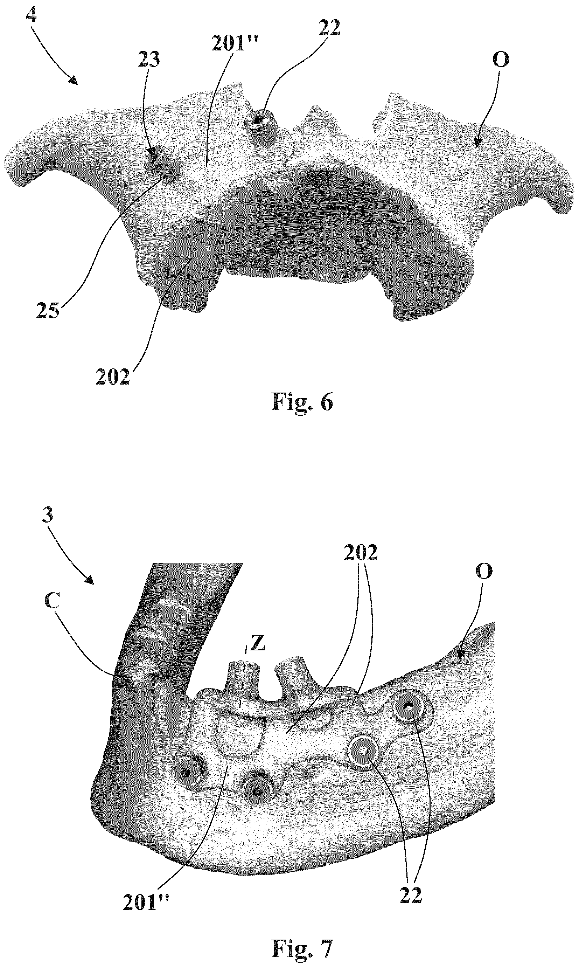

- Figure 6 shows a view of the osteoctomy template of the subperiosteal surgical kit in question, according to a third embodiment arranged to be mounted on a maxillary bone;
- Figure 7 shows a view of the positioning template of Figure 4A mounted on a mandibular bone;

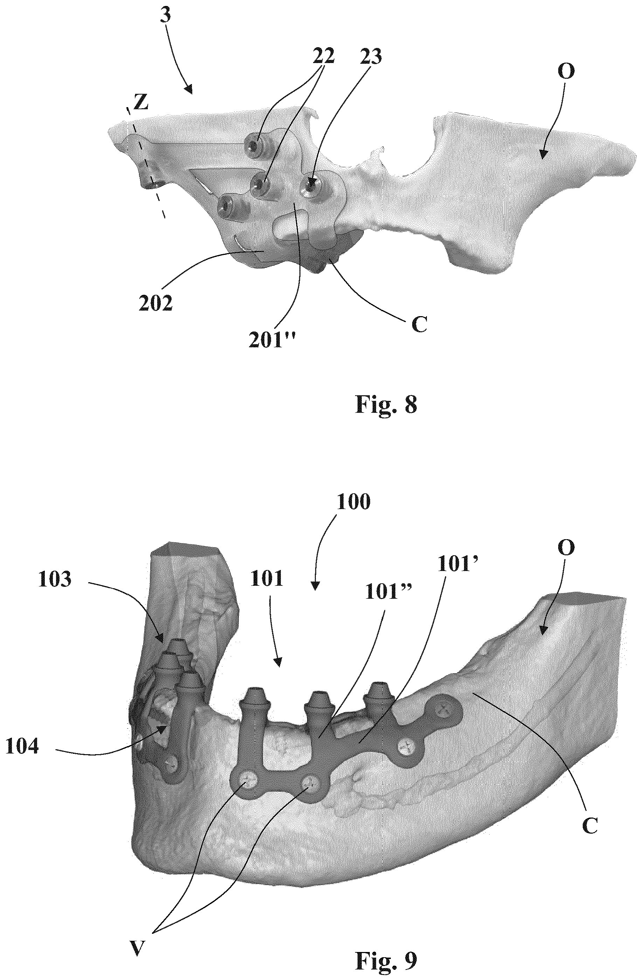

- Figure 8 shows a view of the positioning template of the subperiosteal surgical kit in question, according to the aforementioned third embodiment example;
- Figure 9 shows a perspective view of the subperiosteal implant (mounted on a mandibular bone) of the subperiosteal surgical kit object of the invention, according to the aforementioned second embodiment example;

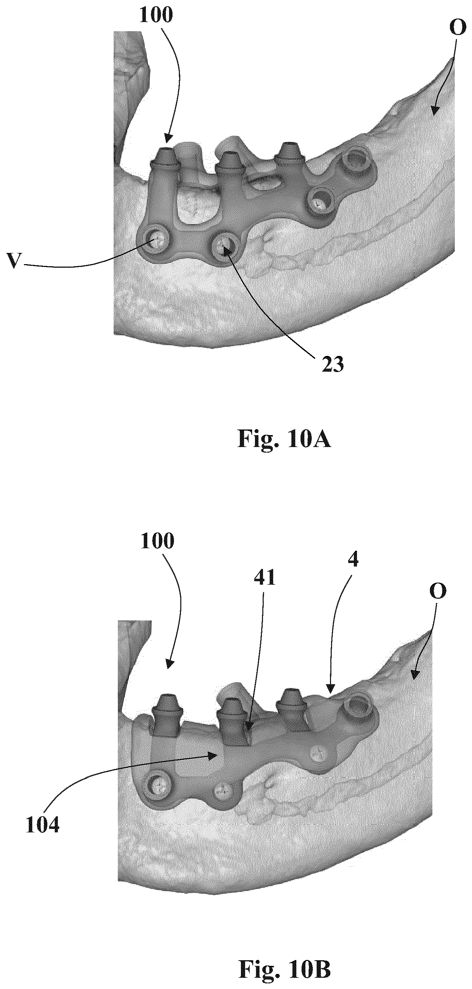

- Figure 10A shows a view of the subperiosteal implant of Figure 9, on which the positioning template of Figure 4A is artificially superimposed (without guide sleeves);
- Figure 10B shows a view of the subperiosteal implant of Figure 9, on which the osteoctomy template of Figure 4B is artificially superimposed (without guide sleeves).

### Detailed description of a preferred embodiment example

With reference to the accompanying drawings, the subperiosteal surgical kit object of the invention has been indicated as a whole with reference numeral 1.

The subperiosteal surgical kit 1 object of the invention is advantageously intended to be used in maxillofacial surgery, in particular in juxtaosseous or subperiosteal surgery, in order to install a subperiosteal implant on a patient's maxillary or mandibular bone.

Advantageously, the kit 1 object of the invention may also be used to prepare an implant site by means of several milling operations and in order to install the subsequent subperiosteal implant, as better illustrated below.

According to the invention, the subperiosteal surgical kit 1 comprises a subperiosteal implant 100 fixable to the maxillary or mandibular bone O of a patient (hereinafter referred to generically as bone O for simplicity of explanation).

The subperiosteal implant 100 comprises a first frame 101, arranged to rest on an external surface of the patient's maxillary or mandibular bone O and is provided with several through fixing holes 102, each of which is provided with a corresponding first axis and is arranged to receive a corresponding bone screw V, for example an osteosynthesis screw, to fix the subperiosteal implant 100 to the patient's maxillary or mandibular bone O.

Advantageously, the subperiosteal implant 100 is made of a biocompatible material, for example titanium, and may preferably be made by means of a rapid prototyping process such as for example laser melting, powder technology, milling, etc.

Of course, it is also possible to make this subperiosteal implant 100 of a different material, such as for example of a plastic material, preferably also biocompatible, or alternatively of a ceramic material.

The first frame 101 is counter-shaped to the bone O of the patient on which it must rest, so as to define an intimate and non-punctual support capable of increasing the stability of the entire subperiosteal implant 100 during the surgical operation, as better described hereinafter.

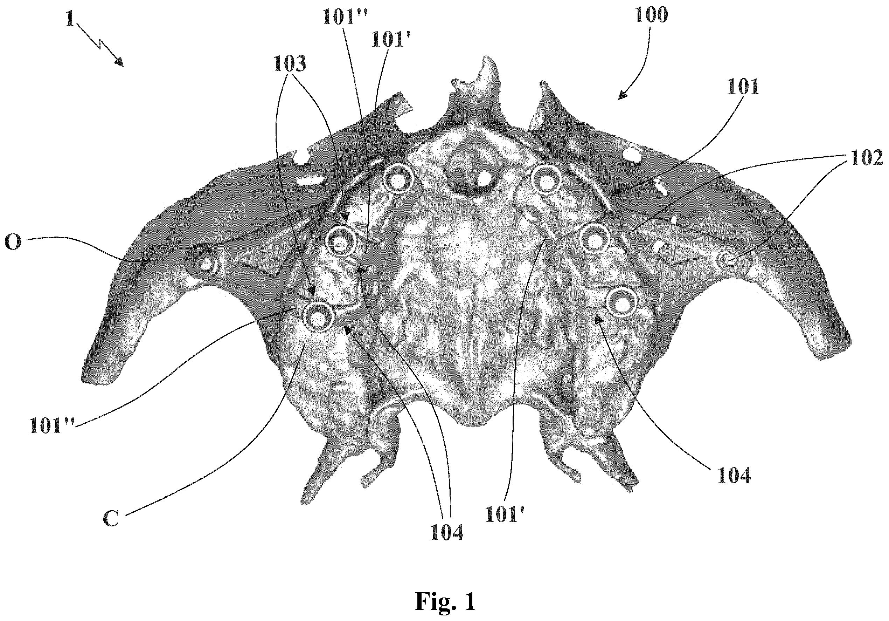

Advantageously, the first frame 101 of the subperiosteal implant 100 is a frame of the type with arms, preferably made in a single body, and is preferably formed by several support arms, intended to rest on the patient's bone O and connected to each other, as visible in Figure 1.

In particular, the aforesaid support arms define corresponding support portions 104 on the maxillary or mandibular bone O.

In more detail, the first frame 101 of the subperiosteal implant 100 is provided with several first support arms 101', which are intended to be placed on opposite lateral sides of the alveolar crest C of the bone O, and several second support arms 101", which are placed as a connection between the first support arms 101' and are placed at least to partially envelop the alveolar crest C of the patient, straddling the latter.

In this way, it is possible to lighten the structure of the subperiosteal implant 100, which is therefore more comfortable and less invasive for the user.

Advantageously, in a manner known per se, the subperiosteal implant 100 is provided with one or more stumps 103, which project overhanging from the first frame 101, and on each of which a dental restoration implant of the patient is intended to be mounted.

Advantageously, the stumps 103 are made in one piece with the first frame 101, but alternatively they may be fixed to the latter by screwing, preferably providing a threaded seat on the first frame 101 and a counter-threading on the abutment 103.

Preferably, the stumps 103 are fixed on the second support arms 101" of the first frame 101 of the subperiosteal implant 100, in particular in an apical, substantially median position of the latter.

Preferably, the fixing holes 102 of the subperiosteal implant 100 are obtained on the first support arms 101', so as to distance the aforementioned fixing holes 102 from the stumps 103, improving the ease of installation of the subperiosteal implant 100.

The kit 1 also comprises at least one surgical template 2, which comprises a second frame 20, arranged to rest on the external surface of the patient's maxillary or mandibular bone O.

Of course, the subperiosteal implant 100 and the surgical template 2 may also rest on different portions of bone O of the patient, such as for example the bony walls of the maxillary sinus, the zygomatic bone, etc. without thereby departing from the scope of protection of the present invention.

Advantageously, at least the second frame 20 of the surgical template 2 is made of a biocompatible material, preferably of a biocompatible polymeric material, or alternatively of titanium.

The second frame 20 is counter-shaped to the bone O of the patient on which it must rest, so as to define an intimate and non-punctual support capable of increasing the stability of the entire implant during the surgical operation, as better described hereinafter.

The surgical template 2 comprises several guide bushings 22, fixed to the second frame 20 and each internally defining a corresponding guide channel 23. In more detail, the expression "guide channel" will hereafter mean a generic through guide channel formed inside the corresponding guide bushing 22, without this channel necessarily being understood as defining a closed internal surface.

The guide channel 23 is provided with a corresponding second axis and is arranged to receive, preferably to size, and to guide a surgical drill to make a corresponding mounting hole in the maxillary or mandibular bone O of the patient.

In particular, each guide channel 23 is a through channel, which extends along the corresponding guide bushing 22, along an extension direction Z, coinciding with the second axis, between an upper insertion opening and a lower outlet opening, opposite the insertion opening.

In particular, the surgical drill is intended to be inserted into the insertion opening and, passing through the aforesaid guide channel 23, exit from the outlet opening.

The second axes of the guide channels 23 of the surgical template 2 have the same spatial distribution as the first axes of the corresponding fixing holes 102 of the first frame 101 of the subperiosteal implant 100 to fix the bone screws V of the subperiosteal implant 100 on corresponding mounting holes 102.

In other words, each fixing hole 102 of the subperiosteal implant 100, when the latter is fixed to the patient's bone O, is intended to be placed in the same position in which a corresponding guide channel 23 is placed when the surgical template 2 is mounted on the patient's bone O, so as to be able to fix the subperiosteal implant 100 exploiting the mounting holes made with the surgical drill guided by the guide bushings 22.

Advantageously, the second frame 20 of the surgical template 2 is provided with at least two main arms 201, which extend side by side and spaced apart from each other, and are arranged to be positioned on opposite sides of an alveolar crest C of the maxillary bone O.

Preferably, the guide bushings 22 are mounted on the main arms 201.

Advantageously, the second frame 20 of the surgical template 2 is provided with at least one connecting arm 202, and preferably several connecting arms 202, which extend as a connection between the main arms 201 and are arranged to be placed on the alveolar crest C, straddling the aforesaid sides.

In particular, the connecting arms 202 extend to envelope at least partially the alveolar crest 201.

The particular configuration of the second frame 20, provided with connecting arms 202, allows an extremely solid but at the same time light and easy to install surgical template 2 to be created, and furthermore allows a template 2 to be obtained which allows a wide visibility of the whole area of implantation and sliding of the tools for the surgeon.

Advantageously, the second frame 20 is shaped in such a way that the surgical template 2 may be orientated unequivocally on the patient's bone, to allow rapid installation of the surgical template 2 itself and to reduce the risk of errors by the surgeon.

Advantageously, the second frame 20 rests exclusively on bone tissue and not on soft tissue, so as to avoid yielding or misalignments of the surgical template 2 due to possible inflammation of the mucous membrane or anomalous absorption of the anesthetic by the mucous membrane itself.

**In** particular, the second frame 20 comprises a first main arm 201', which is placed at a palatal portion of the patient's bone, on a first side of the alveolar crest C, and a second main arm 201" which is placed at a buccal portion of the patient's bone, on an opposite second side of the alveolar crest C.

Advantageously, the main arms 201 extend following a development substantially parallel to the alveolar crest C.

In more detail, the main arms 201 extend along a first direction of development X, substantially curvilinear, and the connecting arms 202 extend along a second direction of development Y, transversal to the first direction of development X.

Advantageously, the second frame 20 is provided with several through openings 24 each of which is aligned with the second axis of the guide channel 23 of the corresponding guide bushing 22, so as to allow the passage of the surgical drill.

Advantageously, the second frame 20 of the surgical template 2 is provided with several mounting seats 26, in each of which a corresponding guide bushing 22 is mounted.

Advantageously, the guide bushings 22 are removably mounted in the mounting seats 26, so that they may be removed and separated from the second frame 20 once the installation of the subperiosteal implant 100 has been completed.

Of course, it is also possible for production reasons to provide disposable kits in which the second frame 20 and the guide bushings 22 are thrown away after a single use.

Advantageously, the second frame 20 is provided with a rear surface intended to face the outer surface of the maxillary or mandibular bone O, and with an opposite front surface.

Preferably, each housing seat 26 extends passing between the rear surface and the front surface of the second frame 20, and in particular extends between a lower opening, formed on the lower surface and intended to face the patient's bone O, and an opposite upper opening obtained on the upper surface of the second frame 20.

Preferably, each through opening 24 is defined by a corresponding mounting seat 26 and even more preferably the lower opening coincides with a through opening 24 of the second frame 20. Advantageously, the surgical template 2 is provided with several mounting elements 25, which project from the front surface of the second frame 20, and each of which is internally provided with a corresponding mounting seat 26.

In particular, the centering elements 25 are advantageously fixed to the second frame 20, preferably in a single body. Advantageously, the centering elements 25 project from the main arms 201 of the second frame 20.

Advantageously, each guide bushing 22 is mounted in a mounting seat 26 of a corresponding centering element 25.

In particular, each guide bushing 22 is mounted coaxially in the mounting seat 26, with its own guide channel 23 which has a development direction Z preferably coinciding with a development direction of the respective mounting seat 26.

In other words, the mounting seat 26 extends along the second axis of the guide channel 23.

As explained above, the guide bushings 22 are removably mounted in the mounting seats 26. For example, the guide bushings 22 may be inserted inside the mounting seats 26, preferably by interference, so as to allow easy assembly and disassembly but at the same time ensuring that the guide bushings 22 are kept in position during the milling operations of the bone O.

For this purpose, the mounting seats 26 have an internal diameter of between 2 and 10 mm, and preferably the guide bushings 22 have an external diameter of between 2 and 10 mm.

Advantageously, the centering elements 25 and the guide bushings 22 may be fixed together, for example by screwing.

For this purpose, the centering elements 25 are advantageously provided with a first threading, and the guide bushings 22 are provided with a second threading, which may be screwed into the first threading of the centering elements, to screw the guide bushings to the centering elements 25.

Advantageously, each guide bushing 22 is provided with an external surface.

Preferably, the first threading is formed inside the mounting seat 26, in particular at one of its internal surfaces, and the second threading is formed on the external surface of the guide bushing 22.

Advantageously, the first threading is obtained in the vicinity of the upper opening and is preferably located only at the aforementioned upper opening.

Advantageously, the kit 1 comprises fixing means adapted to allow the second frame 20 to be temporarily fixed to the patient's bone O, once the surgeon has made the hole with the drill F, for the subsequent drilling steps.

In particular, the fixing means, for example fixing pins or screws, are placed across the guide bushings 22 to engage the lower opening and the mounting hole previously made using the drill F.

Alternatively, in particular in the case in which the guide bushings 22 are removably mounted in the mounting seats 26, it is possible to remove the guide bushings 22 once the surgeon has made the hole with the drill F, to engage the mounting seats 26 by means of the aforesaid fixing means.

Advantageously, the first frame 101 of the subperiosteal implant 100 comprises several support portions 104 which, when the subperiosteal implant 100 is fixed to the maxillary or mandibular bone O, are placed in abutment on corresponding support areas of the external surface of the maxillary or mandibular bone O.

Advantageously, the surgical template 2 comprises a positioning template 3 and an osteoctomy template 4, each of which may be provided with the aforementioned features described above for a generic surgical template 2.

Preferably, both the positioning template 3 and the osteoctomy template 4 are provided with the aforementioned centering elements 25, and therefore with the respective mounting seats 26, and even more preferably they have an arm structure of the type described above which, of the differences shown below, has at least two main arms 201 and at least two connecting arms 202. Advantageously, the positioning template 3 comprises guide bushings 22 in a number equal to the number of the fixing holes 102 of the subperiosteal implant 100.

Advantageously, the positioning template 3 is adapted to allow all the mounting holes to be made for the subperiosteal implant 100.

Advantageously, the subperiosteal implant 100 comprises at least three fixing holes 102 and the positioning template 3 therefore comprises at least three guide bushings 22.

According to the preferred embodiment, the subperiosteal implant 100 comprises seven fixing holes 102 and the positioning template 3 comprises seven guide bushings 22.

Advantageously, the second frame 20 of the osteoctomy template 4 is provided with at least one through grinding window 41, which, when the osteoctomy template 4 is fixed to the maxillary or mandibular bone O, is placed at a corresponding support area of the support surface of the maxillary or mandibular bone O, to allow the corresponding support area to be grinded, by means of a grinding tool, before installing the subperiosteal implant 100.

Advantageously, the grinding window is delimited between the main arms 201 and the at least one connecting arm 202 of the second frame 20. Preferably, the grinding window is delimited by two main arms 201 and by two connecting arms 202 of the second frame 20.

Advantageously, the grinding window 41 is laterally delimited, along the first direction of development X, by the connecting arms 202, and along the second direction of development Y by the main arms 201.

According to the preferred embodiment illustrated in the accompanying figures, the osteoctomy template 4 comprises four connecting arms 202, which delimit three separate grinding windows 41 between them.

Preferably, the grinding window 41 has a substantially polygonal section, and even more preferably it has a main development substantially orthogonal to the first development direction X.

Advantageously, each grinding window 41 is intended to allow an easy osteoctomy operation by an operator, and for this purpose it is preferably provided with a dimension of at least 6 mm².

As explained above, the subperiosteal implant 100 is provided with several support arms, which are intended to be rested against the maxillary or mandibular bone of a patient.

In particular, the aforesaid support arms define the support portions 104 on the maxillary or mandibular bone O.

Advantageously, therefore, each grinding window 41 of the osteoctomy template 4 is placed, when the osteoctomy template 4 is fixed to the maxillary or mandibular bone O, at at least part of a support arm of the first frame 101 of the subperiosteal implant 100.

In this way, it is possible to carry out an osteoctomy operation exactly at the support points of the subperiosteal implant 100, guaranteeing an even more precise and intimate support of the same subperiosteal implant 100 on the patient's bone O.

Advantageously, the osteoctomy template 4 is adapted to allow an osteoctomy operation to be carried out on the alveolar crest C of a patient. Advantageously, this osteoctomy process is preliminary to the installation of the subperiosteal implant 100 and is preferably carried out after the milling process performed using the positioning template 3, to make the mounting holes.

Of course, without thereby departing from the scope of protection of the present invention, the osteoctomy process may also be performed after the aforementioned milling process, as better illustrated below.

Advantageously, the osteoctomy template 4 comprises guide bushings 22 in a lower number than the number of fixing holes 102 of the subperiosteal implant 100, and therefore preferably in a lower number than the number of guide bushings 22 of the positioning template 3.

Advantageously, the osteoctomy template 4 comprises a maximum of five guide bushings 22, and preferably a maximum of three guide bushings 22.

According to the preferred embodiment, the osteoctomy template 4 comprises three guide bushings 22.

Advantageously, when the osteoctomy template 4 is positioned on the patient's bone O, the corresponding guide bushings 22 are intended to be placed in positions coinciding with at least part of the guide bushings 22 of the positioning template 3, when the latter is placed on the patient's bone O.

In this way, irrespective of the mounting order of the two templates 3, 4, it is possible to reuse at least part of the mounting holes obtained by means of the guide bushings 22 of one of the two templates 3, 4 also for the other template 3, 4.

For example, according to the preferred embodiment in which the osteoctomy process is subsequent to the drilling of the bone O, the guide bushings 22 of the osteoctomy template 4 are configured to be placed aligned with the mounting holes which have been obtained by the cutter F using the positioning template 3.

Advantageously, in the case in which, as explained above, the templates 3, 4 have centering elements 25 provided with respective housing seats 26 which extend between a lower opening and an opposite upper opening, the lower openings of the centering elements 25 of the second frame 20 of the osteoctomy template 4 are placed in positions coinciding with at least part of the lower openings of the centering elements 25 of the second frame 20 of the positioning template 3.

Advantageously, at least the bushings 22 of the osteoctomy template 4 are fixed at the main arms 201 of the respective second frame 2.

Preferably, the bushings 22 of the positioning template 3 are also fixed at the main arms 201 of the respective second frame 2.

Advantageously, the subperiosteal implant 100 is provided with several stumps 103, which are fixed to the first frame 101 at at least one of the support portions 104.

Preferably, each abutment 103 is fixed to a support arm of the first frame 101, and the grinding window 41 of the osteoctomy template 4 is placed, when the osteoctomy template 4 is fixed to the maxillary or mandibular bone O, at at least one corresponding abutment 103 of the subperiosteal implant 100.

In this way, it is possible to carry out an osteoctomy operation exactly at the stumps 103 of the subperiosteal implant 100, guaranteeing an even more secure support of the subperiosteal implant 100 at the stumps 103, which define critical points for the sealing of the entire subperiosteal implant.

Furthermore, the object of the present invention is a method for designing the subperiosteal surgical kit 1 of the type described above, and of which the same reference numerals will be maintained for simplicity of explanation.

The method provides for an acquisition step, wherein at least one three-dimensional image of a site for a subperiosteal implant 100 of a patient is acquired, at a mandibular or maxillary bone O.

Preferably, the acquisition step provides for a scan operation of the patient's skull, for example by means of a computerized tomography or similar computerized scanning technique, so as to acquire a first set of data of the bone portion of the patient to be treated. Following scanning, said dataset is advantageously converted into a 3D data set in a format suitable for being read by a CAD viewer, for example in "stl" format. The 3D dataset is advantageously imported into a computer to allow for the subsequent digital design step.

The method further comprises a first design step, wherein a 3D model of the subperiosteal implant 100 is designed on the basis of the three-dimensional image of the patient's site.

The method further comprises an identification step, wherein a spatial distribution of the fixing holes 102 of the first frame 101 of the subperiosteal implant 100 is defined, as a function of at least the three-dimensional image of the site, and preferably also of the 3D model of the subperiosteal implant 100.

Of course, this first design step and such identification step are not necessarily to be carried out in this order but may also be reversed, providing for example to preliminarily identify the fixing holes 102 of the first frame 101, for example on the basis of clinical analyzes of the patient's bone atrophy, and then design the rest of the subperiosteal implant 100.

The method further comprises a second design step, wherein a 3D model of at least one surgical template 2 is designed with the guide bushings 22 placed according to the defined spatial distribution of the fixing holes 102.

Advantageously, the identification step also provides for identifying, by means of the three-dimensional image of the site, support areas on the maxillary or mandibular bone O and, as a function of these identified support areas (and the first 3D model of the subperiosteal implant 100), the spatial distribution of corresponding support portions 104 of the first frame 101 of the subperiosteal implant 100, configured to be placed at the support areas, is identified.

Advantageously, in the design step a 3D model of the positioning template 3 is also designed, with a number of guide bushings 22 equal to the number of fixing holes 102 of the subperiosteal implant 100 and placed according to the spatial distribution of the fixing holes 102.

Advantageously, a 3D model of the osteoctomy template 4 is also designed in the design step, with at least one grinding window 41 placed according to the spatial distribution of corresponding support portions 104 of the first frame 101 of the subperiosteal implant 100.

Advantageously, at the end of the design step, the 3D file of the surgical template 2 is sent to a rapid prototyping machine, for example SLS (selective laser sintering), 3D printer or alternative rapid prototyping techniques, which produces the surgical template 2 based on the digital design obtained from the program.

Advantageously, moreover, at the end of the design step, the 3D file of the subperiosteal implant 100 is sent to a rapid prototyping machine, for example SLS (selective laser sintering), 3D printer or alternative rapid prototyping techniques, which produces the subperiosteal implant 100 based on the digital design obtained from the program.

In this way, it is possible to obtain subperiosteal surgical kit 1 by means of a totally digital process, which therefore allows a highly customizable kit 1 to be obtained for the user and highly comfortable both to use for the surgeon and from the point of view of invasiveness for the client, as it allows the interaction between the kit 1 and the portions of bone or soft tissue not to be touched or stressed during the surgical step to be minimized.

The invention thus conceived therefore achieves the intended objects.

## Claims

1. Subperiosteal surgical kit (1), which comprises:
- a subperiosteal implant (100) fixable to the maxillary or mandibular bone (O) of a patient and comprising a first frame (101), which is arranged to rest on an external surface of the patient's maxillary or mandibular bone (O) and is provided with several through fixing holes (102), each fixing hole (102) is provided with a corresponding first axis and is arranged to receive a corresponding bone screw (V) to fix said subperiosteal implant (100) to the patient's maxillary or mandibular bone (O);
wherein said first frame (101) is counter-shaped to said maxillary or mandibular bone (O) of the patient on which said first frame (101) must rest;
- at least one surgical template (2), which comprises:
• a second frame (20), which is arranged to rest on the external surface of the patient's maxillary or mandibular bone (O), and which is counter-shaped to said maxillary or mandibular bone (O) of the patient on which said second frame (20) must rest; and
• several guide bushings (22) fixed to said second frame (20) and each internally defining a corresponding guide channel (23), which is provided with a corresponding second axis and is arranged to receive and guide a surgical drill to make a corresponding mounting hole in the patient's maxillary or mandibular bone;
wherein each said guide channel (23) is a through channel, which extends along the corresponding said guide bushing (22), along an extension direction (Z), coinciding with said second axis, between an upper insertion opening and a lower outlet opening, opposite said insertion opening;
the second axes of the guide channels (23) of said at least one surgical template (2) having the same spatial distribution as the first axes of corresponding said fixing holes (102) of said subperiosteal implant (100) to fix the bone screws (V) of said subperiosteal implant (100) on corresponding said mounting holes (102).

2. Subperiosteal surgical kit according to claim 1, **characterized in that** said second frame (20) is provided with several mounting seats (26), in each of which a corresponding said guide bushing (22) is mounted.

3. Subperiosteal surgical kit according to claim 2, **characterized in that** said second frame (20) is provided with a rear surface intended to face the outer surface of the maxillary or mandibular bone (O), and with an opposite front surface;
said at least one surgical template (2) being provided with several mounting elements (25), which project from the front surface of said second frame (20), and each of which is internally provided with a corresponding said mounting seat (26).

4. Subperiosteal surgical kit according to any one of the preceding claims, **characterized in that** said second frame (20) is provided with several through openings (24) each of which is aligned with the second axis of the guide channel (23) of the corresponding said guide bushing (22).

5. Subperiosteal surgical kit according to claim 4 and claim 2 or 3, **characterized in that** each said through opening (24) is defined by a corresponding said mounting seat (26).

6. Subperiosteal surgical kit according to any one of claims from 2 to 5, **characterized in that** said guide bushings are removably mounted in said mounting seats.

7. Subperiosteal surgical kit according to any one of claims from 2 to 6, **characterized in that** said guide bushings (22) are engageable with said mounting elements (25), by insertion by interference into said mounting seats (26).

8. Subperiosteal surgical kit according to any one of claims 2 to 6, **characterized in that** said mounting elements (25) are provided with a first thread, and said guide bushings (22) are provided with a second thread, engageable by screwing to the first threading of said mounting elements (25), for screwing said guide bushings to said mounting elements.

9. Subperiosteal surgical kit according to any one of the preceding claims, **characterized in that** said second frame (20) comprises:
- at least two main arms (201), which extend side by side and spaced apart from each other, and are arranged to be positioned on opposite sides of an alveolar crest (C) of the maxillary or mandibular bone (O); said guide bushings (22) being mounted on said main arms (201);
- and at least one connecting arm (202), which extends as a connection between said main arms (201) and is arranged to be placed on the alveolar crest (C), straddling said sides.

10. Subperiosteal surgical kit according to any one of the preceding claims, **characterized in that**
the first frame (101) of said subperiosteal implant (100) comprises several support portions (104) which, when said subperiosteal implant is fixed to said maxillary or mandibular bone, are placed in abutment on corresponding support areas of the external surface of said maxillary or mandibular bone (O);
said at least one surgical template (2) comprising:
- a positioning template (3), which comprises said guide bushings (22) in a number equal to the number of said fixing holes (102) of said subperiosteal implant (100);
- an osteoctomy template (4), whose said second frame (20) is provided with at least one through grinding window (41), which, when said osteoctomy template (4) is fixed to said maxillary or mandibular bone (O), is placed at a corresponding said support area of the support surface of said maxillary or mandibular bone (O), to allow said corresponding support area to be grinded, by means of a grinding tool, before installing said subperiosteal implant (100).

11. Subperiosteal surgical kit according to claims 9 and 10, **characterized in that** said at least one grinding window (41) is delimited between said main arms (201) and between two said connecting arms (202).

12. Subperiosteal surgical kit according to claim 11, **characterized in that** said subperiosteal implant (100) is provided with several stumps (103), which are fixed to said first frame (101) at at least one of said support portions (104).

13. Subperiosteal surgical kit according to any one of the preceding claims from 10 to 12, **characterized in that** said osteoctomy template (4) comprises said guide bushings (22) in a lower number than the number of said fixing holes (102) of said subperiosteal implant (100).

14. Method for designing a subperiosteal surgical kit according to any one of the preceding claims, **characterized in that** it provides:
- an acquisition step, wherein at least one three-dimensional image of a site for a subperiosteal implant of a patient is acquired, at a mandibular or maxillary bone;
- a first design step, wherein a 3D model of said subperiosteal implant is designed on the basis of said three-dimensional image of the site of the patient;
- an identification step, wherein a spatial distribution of the fixing holes of the first frame of said subperiosteal implant is defined as a function of at least said three-dimensional image of said site;
- a second design step, wherein a 3D model of said at least one surgical template is designed with said guide bushings arranged according to the defined spatial distribution of said fixing holes.

15. Method according to claim 14 and according to any one of claims 10 to 13, **characterized in that** in said identification step, support areas on said maxillary or mandibular bone are identified in said three-dimensional image of said site and, as a function of said identified support areas and on the first 3D model of said subperiosteal implant, the spatial distribution of corresponding support areas of the first frame of said subperiosteal implant configured to be placed at said support areas is identified;
in said design step the following being designed:
- a 3D model of said positioning template, with a number of said guide bushings equal to or less than the number of fixing holes of said subperiosteal implant and placed according to the spatial distribution of said fixing holes;
- a 3D model of said osteoctomy template, with said at least one grinding window placed according to the spatial distribution of corresponding support portions of the first frame of said subperiosteal implant.

## Patentansprüche

1. Subperiostealimplantatkit (1), das Folgendes umfasst:
- ein Subperiostealimplantat (100), das am Ober- oder Unterkieferknochen (O) eines Patienten befestigt werden kann und einen ersten Rahmen (101) umfasst, der darauf ausgelegt ist, an einer Außenfläche des Ober- oder Unterkieferknochens (O) des Patienten aufzuliegen und mit mehreren, durchgehenden, Befestigungsöffnungen (102) versehen ist, wobei jede dieser Befestigungsöffnungen (102) mit einer entsprechenden ersten Achse versehen und darauf ausgelegt ist, eine entsprechende Knochenschraube (V) aufzunehmen, um das genannte Subperiostealimplantat (100) an dem Ober- oder Unterkieferknochen (O) des Patienten zu befestigen;
wobei der genannte erste Rahmen (101) ein Gegenprofil zu dem genannten Ober- oder Unterkieferknochen (O) des Patienten bildet, auf dem der genannte erste Rahmen (101) aufliegen soll;
- mindestens eine chirurgische Schablone (2), die Folgendes umfasst:
• einen zweiten Rahmen (20), der darauf ausgelegt ist, auf der Außenfläche des Ober- oder Unterkieferknochens (O) des Patienten aufzuliegen und der im Vergleich zu dem genannten Ober- oder Unterkieferknochen (O) des Patienten, auf dem der genannte zweite Rahmen (20) aufliegen soll, ein Gegenprofil bildet; und
• mehrere Führungsbuchsen (22), die an dem genannten zweiten Rahmen (20) befestigt sind und jeweils im Inneren einen entsprechenden Führungskanal (23) definieren, der mit einer entsprechenden zweiten Achse versehen und darauf ausgelegt ist, einen chirurgischen Fräser aufzunehmen und zu führen, um eine entsprechende Montageöffnung an dem Ober- oder Unterkieferknochen des Patienten anzubringen;
wobei jeder genannte Führungskanal (23) ein durchgehender Kanal ist, der entlang der entsprechenden genannten Führungsbuchse (22) entlang einer Verlaufsrichtung (Z), die mit der genannten zweiten Achse übereinstimmt, zwischen einer oberen Einführöffnung und einer der genannten Einführöffnung gegenüberliegenden unteren Austrittsöffnung verläuft;
wobei die zweiten Achsen der Führungskanäle (23) der genannten mindestens einen chirurgischen Schablone (2) die gleiche räumliche Verteilung wie die ersten Achsen von entsprechenden genannten Befestigungsöffnungen (102) des genannten Subperiostealimplantats (100) aufweisen, um die Knochenschrauben (V) des genannten Subperiostealimplantats (100) an entsprechenden genannten Montageöffnungen (102) zu befestigen.

2. Subperiostealimplantatkit nach Anspruch 1, **dadurch gekennzeichnet, dass** der genannte zweite Rahmen (20) mit mehreren Montagesitzen (26) versehen ist, in denen jeweils eine entsprechende genannte Führungsbuchse (22) montiert ist.

3. Subperiostealimplantatkit nach Anspruch 2, **dadurch gekennzeichnet, dass** der genannte zweite Rahmen (20) mit einer hinteren Fläche, die dazu bestimmt ist, zu der Außenfläche des Ober- oder Unterkieferknochens (O) gerichtet zu sein, und mit einer gegenüberliegenden vorderen Fläche versehen ist;
wobei die genannte mindestens eine chirurgische Schablone (2) mit mehreren Montageelementen (25) versehen ist, die von der vorderen Fläche des genannten zweiten Rahmens (20) vorstehend verlaufen und von denen jedes im Inneren mit einem entsprechenden Montagesitz (26) versehen ist.

4. Subperiostealimplantatkit nach einem beliebigen der vorangegangenen Ansprüche, **dadurch gekennzeichnet, dass** der genannte zweite Rahmen (20) mit mehreren durchgehenden Öffnungen (24) versehen ist, von denen jede mit der zweiten Achse des Führungskanals (23) der entsprechenden genannten Führungsbuchse (22) ausgerichtet ist.

5. Subperiostealimplantatkit nach Anspruch 4 und Anspruch 2 oder 3, **dadurch gekennzeichnet, dass** jede genannte durchgehende Öffnung (24) durch einen entsprechenden genannten Montagesitz (26) definiert ist.

6. Subperiostealimplantatkit nach einem beliebigen der Ansprüche 2 bis 5, **dadurch gekennzeichnet, dass** die genannten Führungsbuchsen lösbar in den genannten Montagesitzen angebracht sind.

7. Subperiostealimplantatkit nach einem beliebigen der Ansprüche 2 bis 6, **dadurch gekennzeichnet, dass** die genannten Führungsbuchsen (22) mit den genannten Montageelementen (25) mittels Presspassung in den genannten Montagesitzen (26) in Eingriff gebracht werden können.

8. Subperiostealimplantatkit nach einem beliebigen der Ansprüche 2 bis 6, **dadurch gekennzeichnet, dass** die genannten Montageelemente (25) mit einem ersten Gewinde versehen sind und die genannten Führungsbuchsen (22) mit einem zweiten Gewinde versehen sind, das durch Verschraubung mit dem ersten Gewinde der genannten Montageelemente (25) in Eingriff gebracht werden kann, um die genannten Führungsbuchsen an den genannten Montageelementen zu verschrauben.

9. Subperiostealimplantatkit nach einem beliebigen der vorangegangenen Ansprüche, **dadurch gekennzeichnet, dass** der genannte zweite Rahmen (20) Folgendes umfasst:
- mindestens zwei Hauptarme (201), die nebeneinander und im Abstand zueinander verlaufen und darauf ausgelegt sind, an gegenüberliegenden Flanken eines Alveolarfortsatzes (C) des Ober- oder Unterkieferknochens (O) positioniert zu werden; wobei auf den genannten Hauptarmen (201) die genannten Führungsbuchsen (22) montiert sind;
- und mindestens einen Verbindungsarm (202), der als Verbindung zwischen den genannten Hauptarmen (201) verläuft und darauf ausgelegt ist, auf dem Alveolarfortsatz (C) die beiden genannten Flanken überspannend angeordnet zu werden.

10. Subperiostealimplantatkit nach einem beliebigen der vorangegangenen Ansprüche, **dadurch gekennzeichnet, dass**
der erste Rahmen (101) des genannten Subperiostealimplantats (100) mehrere Auflagebereiche (104) umfasst, die, wenn das genannte Subperiostealimplantat an dem genannten Ober- oder Unterkieferknochen befestigt ist, aufliegend an entsprechenden Auflageabschnitten der Außenfläche des genannten Ober- oder Unterkieferknochens (O) angeordnet sind;
wobei die genannte mindestens eine chirurgische Schablone (2) Folgendes umfasst:
- eine Positionierungsschablone (3), die die genannten Führungsbuchsen (22) in einer Anzahl umfasst, die der Anzahl der genannten Befestigungsöffnungen (102) des genannten Subperiostealimplantats (100) entspricht;
- eine Osteotomieschablone (4), wobei der genannte zweite Rahmen (20) mit mindestens einem, durchgehenden, Berichtigungsfenster (41) versehen ist, das, wenn die genannte Osteotomieschablone (4) an dem genannten Ober- oder Unterkieferknochen (O) befestigt ist, an einem entsprechenden genannten Auflageabschnitt der Auflagefläche des genannten Ober- oder Unterkieferknochens (O) angeordnet ist, um es zu gestatten, mit Hilfe eines Berichtigungsinstruments, den genannten entsprechenden Auflageabschnitt vor der Installation des genannten Subperiostealimplantats (100) zu berichtigen.

11. Subperiostealimplantatkit nach Anspruch 9 und 10, **dadurch gekennzeichnet, dass** das genannte mindestens eine Berichtigungsfenster (41) zwischen den genannten Hauptarmen (201) und zwischen zwei genannten Verbindungsarmen (202) eingegrenzt ist.

12. Subperiostealimplantatkit nach Anspruch 11, **dadurch gekennzeichnet, dass** das genannte Subperiostealimplantat (100) mit mehreren Stümpfen (103) versehen ist, die an dem genannten ersten Rahmen (101) an mindestens einem der genannten Auflagebereiche (104) befestigt sind.

13. Subperiostealimplantatkit nach einem beliebigen der vorangegangenen Ansprüche 10 bis 12, **dadurch gekennzeichnet, dass** die genannte Osteotomieschablone (4) die genannten Führungsbuchsen (22) in einer geringeren Anzahl als die Anzahl der genannten Befestigungsöffnungen (102) des genannten Subperiostealimplantats (100) umfasst.

14. Designverfahren eines Subperiostealimplantatkits nach einem beliebigen der vorangegangenen Ansprüche, **dadurch gekennzeichnet, dass** es Folgendes vorsieht:
- eine Erfassungsphase, in der mindestens ein dreidimensionales Bild einer Stelle für ein Subperiostealimplantat eines Patienten an einem Unter- oder Oberkieferknochen erfasst wird;
- eine erste Entwurfsphase, in der ein 3D-Modell des genannten Subperiostealimplantats basierend auf dem genannten dreidimensionalen Bild der Implantatstelle des Patienten entworfen wird;
- eine Feststellungsphase, in der eine räumliche Verteilung der Befestigungsöffnungen des ersten Rahmens des genannten Subperiostealimplantats mindestens abhängig von dem genannten dreidimensionalen Bild der genannten Implantatstelle definiert wird;
- eine zweite Entwurfsphase, in der ein 3D-Modell der genannten mindestens einen chirurgischen Schablone mit den genannten Führungsbuchsen entworfen wird, die entsprechend der festgelegten räumlichen Verteilung der genannten Befestigungsöffnungen angeordnet sind.

15. Verfahren nach Anspruch 14 und nach einem beliebigen der Ansprüche 10 bis 13, **dadurch gekennzeichnet, dass** in der genannten Feststellungsphase in dem genannten dreidimensionalen Bild der genannten Implantatstelle Auflageabschnitte auf dem genannten Ober- oder Unterkieferknochen festgestellt werden, und, abhängig von den festgestellten Auflageabschnitten und dem ersten 3D-Modell des genannten Subperiostealimplantats, eine räumliche Verteilung entsprechender Auflagebereiche des ersten Rahmens des genannten Subperiostealimplantats festgestellt werden, die darauf ausgelegt sind, an den genannten Auflageabschnitten angeordnet zu werden;
wobei in der genannten Entwurfsphase Folgendes entworfen wird:
- ein 3D-Modell der genannten Positionierungsschablone mit einer Anzahl der genannten Führungsbuchsen, die gleich oder kleiner als die Anzahl der Befestigungsöffnungen des genannten Subperiostealimplantats ist, die entsprechend der räumlichen Verteilung der genannten Befestigungsöffnungen angeordnet sind;
- ein 3D-Modell der genannten Osteotomieschablone, wobei das genannte mindestens eine Berichtigungsfenster gemäß der räumlichen Verteilung entsprechender Auflagebereiche des ersten Rahmens des genannten Subperiostealimplantats angeordnet ist.

## Revendications

1. Kit d'implant subpériostéal (1), comprenant :
- un implant subpériostéal (100) pouvant être fixé à l'os maxillaire ou mandibulaire (O) d'un patient et comprenant un premier cadre (101), qui est conçu pour aller en appui sur une surface extérieure de l'os maxillaire ou mandibulaire (O) du patient et qui est muni de plusieurs trous de fixation (102), traversants, chacun de ces trous de fixation (102) étant muni d'un premier axe correspondant et étant conçu pour recevoir une vis à os (V) correspondante pour fixer ledit implant subpériostéal (100) à l'os maxillaire ou mandibulaire (O) du patient ;
dans lequel ledit premier cadre (101) dispose d'une forme complémentaire par rapport audit os maxillaire ou mandibulaire (O) du patient sur lequel ledit premier cadre (101) doit s'appuyer ;
- au moins un guide chirurgical (2), comprenant :
• un second cadre (20), qui est conçu pour aller en appui sur la surface extérieure de l'os maxillaire ou mandibulaire (O) du patient, et qui dispose d'une forme complémentaire par rapport audit os maxillaire ou mandibulaire (O) du patient sur lequel ledit second cadre (20) doit s'appuyer ; et
• plusieurs douilles de guidage (22) fixées audit second cadre (20) et définissant chacune intérieurement un canal de guidage (23) correspondant, qui est muni d'un second axe correspondant et est conçu pour recevoir et guider un foret chirurgical afin de réaliser un trou de montage correspondant dans l'os maxillaire ou mandibulaire du patient ;
dans lequel chaque canal de guidage (23) est un canal traversant, s'étendant le long de ladite douille de guidage (22) correspondante, le long d'une direction d'extension (Z), coïncidant avec ledit second axe, entre une ouverture d'insertion supérieure et une ouverture de sortie inférieure, opposée à ladite ouverture d'insertion ;
les seconds axes des canaux de guidage (23) dudit au moins un guide chirurgical (2) ayant la même distribution spatiale que les premiers axes desdits trous de montage (102) correspondants dudit implant subpériostéal (100) pour fixer les vis à os (V) dudit implant subpériostéal (100) sur lesdits trous de montage (102) correspondants.

2. Kit d'implant subpériostéal selon la revendication 1, **caractérisé en ce que** ledit second cadre (20) est muni de plusieurs sièges de montage (26), dans chacun desquels une douille de guidage (22) correspondante est montée.

3. Kit d'implant subpériostéal selon la revendication 2, **caractérisé en ce que** ledit second cadre (20) est muni d'une surface arrière destinée à faire face à la surface extérieure de l'os maxillaire ou mandibulaire (O), et d'une surface avant opposée ;
ledit au moins un guide chirurgical (2) étant muni de plusieurs éléments de montage (25), qui s'étendent en saillie à partir de la surface avant dudit second cadre (20), et chacun desquels étant muni intérieurement d'un siège de montage (26) correspondant.

4. Kit d'implant subpériostéal selon l'une quelconque des revendications précédentes, **caractérisé en ce que** ledit second cadre (20) est muni de plusieurs ouvertures traversantes (24) dont chacune est alignée sur le second axe du canal de guidage (23) de ladite douille de guidage (22) correspondante.

5. Kit d'implant subpériostéal selon la revendication 4 et la revendication 2 ou 3, **caractérisé en ce que** chaque ouverture traversante (24) est définie par un siège de montage (26) correspondant.

6. Kit d'implant subpériostéal selon l'une quelconque des revendications 2 à 5, **caractérisé en ce que** lesdites douilles de guidage sont montées de manière amovible dans les sièges de montage.

7. Kit d'implant subpériostéal selon l'une quelconque des revendications 2 à 6, **caractérisé en ce que** lesdites douilles de guidage (22) peuvent être mises en prise avec lesdits éléments de montage (25), par insertion d'interférence dans lesdits sièges de montage (26).

8. Kit d'implant subpériostéal selon l'une quelconque des revendications 2 à 6, **caractérisé en ce que** lesdits éléments de montage (25) sont munis d'un premier filetage, et que lesdites douilles de guidage (22) sont munies d'un second filetage, pouvant être vissé au premier filetage desdits éléments de montage (25), afin de visser lesdites douilles de guidage auxdits éléments de montage.

9. Kit d'implant subpériostéal selon l'une quelconque des revendications précédentes, **caractérisé en ce que** ledit second cadre (20) comprend :
- au moins deux bras principaux (201), qui se développent adjacents et espacés l'un de l'autre, et sont conçus pour être positionnés sur des flancs opposés d'une crête alvéolaire (C) de l'os maxillaire ou mandibulaire (O) ; lesdites douilles de guidage (22) étant montées sur lesdits bras principaux (201) ;
- et au moins un bras de liaison (202), qui s'étend pour relier lesdits bras principaux (201) et qui est conçu pour être disposé sur la crête alvéolaire (C), de part et d'autre desdits flancs.

10. Kit d'implant subpériostéal selon l'une quelconque des revendications précédentes, **caractérisé en ce que**
le premier cadre (101) dudit implant subpériostéal (100) comprend plusieurs sections d'appui (104) qui, lorsque ledit implant subpériostéal est fixé audit os maxillaire ou mandibulaire, sont disposées en appui sur des zones d'appui correspondantes de la surface extérieure dudit os maxillaire ou mandibulaire (O) ;
ledit au moins un guide chirurgical (2) comprenant :
- un guide de positionnement (3), qui comprend lesdites douilles de guidage (22) en nombre égal au nombre desdits trous de fixation (102) dudit implant subpériostéal (100) ;
- un guide d'ostéotomie (4), dans lequel le second cadre (20) est muni d'au moins une fenêtre de rectification (41), traversante, qui, lorsque ledit guide d'ostéotomie (4) est fixé à l'os maxillaire ou mandibulaire (O), est disposée au niveau d'une zone d'appui correspondante de la surface d'appui dudit os maxillaire ou mandibulaire (O), afin de permettre de rectifier, au moyen d'un outil de rectification, ladite zone d'appui correspondante avant l'installation dudit implant subpériostéal (100).

11. Kit d'implant subpériostéal selon les revendications 9 et 10, **caractérisé en ce que** ladite au moins une fenêtre de rectification (41) est délimitée entre lesdits bras principaux (201) et entre deux desdits bras de liaison (202).

12. Kit d'implant subpériostéal selon la revendication 11, **caractérisé en ce que** ledit implant subpériostéal (100) est muni de plusieurs piliers (103), qui sont fixés audit premier cadre (101) au niveau d'au moins une desdites sections d'appui (104).

13. Kit d'implant subpériostéal selon l'une quelconque des revendications précédentes 10 à 12, **caractérisé en ce que** ledit guide d'ostéotomie (4) comprend lesdites douilles de guidage (22) en nombre inférieur au nombre desdits trous de fixation (102) dudit implant subpériostéal (100).

14. Méthode de design d'un kit d'implant subpériostéal selon l'une quelconque des revendications précédentes, **caractérisée en ce qu'**elle prévoit :
- une étape d'acquisition, dans laquelle au moins une image tridimensionnelle d'un site pour l'implant subpériostéal d'un patient est acquise, au niveau d'un os mandibulaire ou maxillaire ;
- une première étape de design, dans laquelle un modèle 3D dudit implant subpériostéal est conçu sur la base de ladite image tridimensionnelle du site du patient ;
- une étape d'identification, dans laquelle une distribution spatiale des trous de fixation du premier cadre dudit implant subpériostéal est définie en fonction d'au moins ladite image tridimensionnelle dudit site ;
- une deuxième étape de design, dans laquelle un modèle 3D dudit au moins un guide chirurgical est conçu avec lesdites douilles de guidage disposées selon la distribution spatiale définie desdits trous de fixation.

15. Méthode selon la revendication 14 et selon l'une quelconque des revendications 10 à 13, **caractérisée en ce que**, dans ladite étape d'identification, des zones d'appui sur ledit os maxillaire ou mandibulaire sont identifiées, dans ladite image tridimensionnelle dudit site, et, en fonction desdites zones d'appui identifiées et du premier modèle 3D dudit implant subpériostéal, la distribution spatiale des sections d'appui correspondantes du premier cadre dudit implant subpériostéal, configurées pour être disposées au niveau desdites zones d'appui, est identifiée ;
dans ladite étape de design :
- un modèle 3D dudit guide de positionnement étant conçu, avec un nombre desdites douilles de guidage égal ou inférieur au nombre de trous de fixation dudit implant subpériostéal et disposées en fonction de la distribution spatiale desdits trous de fixation ;
- un modèle 3D dudit guide d'ostéotomie étant conçu, avec ladite moins une fenêtre de rectification disposée en fonction de la distribution spatiale des sections d'appui correspondantes du premier cadre dudit implant subpériostéal.
